# EUROPÄISCHE PATENTSCHRIFT

(11) **EP 2 952 092 B1**
(45) Veröffentlichungstag und Bekanntmachung des Hinweises auf die Patenterteilung: **19.09.2018**
(21) Anmeldenummer: 14171150.7
(22) Anmeldetag: 04.06.2014
(51) Int. Cl.: A01K 5/02, A01K 7/02, A01K 29/00, A01K 9/00

(54) **Vorrichtung zum automatischen Tränken von Kälbern**
Device for automatically watering calves
Dispositif d'abreuvage automatique de veaux

(43) Veröffentlichungstag der Anmeldung: 09.12.2015
(73) Patentinhaber: Holm, Hans Joachim, 24784 Westerrönfeld (DE); Laue, Hans-Joachim, Prof. Dr., 24783 Osterrönfeld (DE)
(72) Erfinder: Holm, Hans Joachim, 24784 Westerrönfeld (DE); Laue, Hans-Joachim, Prof. Dr., 24783 Osterrönfeld (DE)
(74) Vertreter: Hauck Patentanwaltspartnerschaft mbB

(56) Entgegenhaltungen:
- WO-A1-95/19701
- DE-A1- 19 850 536
- GB-A- 2 463 572
- US-A- 6 016 769

## Beschreibung

Die Erfindung betrifft eine Vorrichtung zum automatischen Tränken von Kälbern mit einem Anmischbehälter zum Anmischen eines flüssigen Nahrungsmittels und einem Nuckel, der mit dem Anmischbehälter über eine Verbindungsleitung verbunden ist.

Aus der Druckschrift DE 10 2008 050 715 A1 ist eine solche Vorrichtung bekannt geworden, die eine Versorgung mehrerer Kälber gleichzeitig ermöglichen soll. Hierzu weist die bekannte Vorrichtung mehrere Entnahmestellen mit jeweils einem Nuckel auf. Jedem Nuckel ist eine Saugerfassungsvorrichtung zugeordnet. Saugt ein Tier an einem Nuckel, wird eine in eine Verbindungsleitung zwischen Nuckel und Anmischbehälter integrierte Schlauchpumpe aktiviert, wodurch das Saugen der Kälber unterstützt werden soll. Alternativ kann die Schlauchpumpe manuell mittels einer Drucktastenvorrichtung in Gang gesetzt werden, um zum Anlernen der Kälber Nahrungsmittel zuzuführen. Dieselbe Vorrichtung ist auch in der Druckschrift GB 2463572 A beschrieben.

Aus der Druckschrift DE 198 50 536 A1 ist eine Vorrichtung zum automatischen Tränken von Kälbern mit einer Verbindungsleitung bekannt geworden, die einen Anmischbehälter mit einem Nuckel verbindet. Von der Verbindungsleitung zweigt eine Abzweigleitung ab, in der eine Pumpe angeordnet ist. Mithilfe der Pumpe können insbesondere lange Verbindungsleitungen mit flüssigem Nahrungsmittel gefüllt werden, ohne dass ein Kalb die Flüssigkeit durch die gesamte Verbindungsleitung saugen muss. Außerdem kann die Verbindungsleitung mithilfe der Pumpe entleert oder mit einer Reinigungsflüssigkeit gespült werden. Die Wirkrichtung der Pumpe soll umkehrbar sein, um zum Anlernen junger Kälber flüssiges Nahrungsmittel in den Nuckel zu pressen, sodass das junge Kalb durch Heraustropfen des Nahrungsmittels zum Trinken bzw. Saugen animiert wird.

Davon ausgehend ist es die Aufgabe der Erfindung, eine Vorrichtung zum automatischen Tränken von Kälbern zur Verfügung zu stellen, die ein automatisches Anlernen junger Kälber ermöglicht.

Diese Aufgabe wird gelöst durch die Vorrichtung mit den Merkmalen des Anspruchs 1. Vorteilhafte Ausgestaltungen sind in den Unteransprüchen angegeben.

Die Vorrichtung dient zum automatischen Tränken von Kälbern und hat
- einen Anmischbehälter zum Anmischen eines flüssigen Nahrungsmittels,
- einen Nuckel,
- eine Verbindungsleitung, die den Anmischbehälter mit dem Nuckel verbindet,
- eine Abzweigleitung, die an einem Abzweigpunkt von der Verbindungsleitung abzweigt und die Verbindungsleitung mit einer Pumpe verbindet, und
- eine Steuerung zur Ansteuerung der Pumpe, wobei
- am Nuckel ein Sensor angeordnet ist, der mit der Steuerung verbunden und dazu ausgebildet ist, eine Bewegung und/oder Verformung des Nuckels zu erfassen, und
- die Steuerung dazu ausgebildet ist, bei Erfassen einer Bewegung und/oder Verformung des Nuckels die Pumpe derart anzusteuern, dass flüssiges Nahrungsmittel aus der Abzweigleitung in Richtung zu dem Abzweigpunkt hin gefördert wird, bis flüssiges Nahrungsmittel aus dem Nuckel austritt.

Bei der Erfindung können also einige Tropfen oder ein kleiner Spritzer flüssiges Nahrungsmittel automatisch aus dem Nuckel ausgegeben werden, wenn ein Tier den Nuckel bewegt oder verformt. Ein solcher "Anlernvorgang" kann insbesondere ganz junge Kälber, die mit dem Saugen am Nuckel noch nicht vertraut sind, zum Saugen und Trinken animieren. Hierzu ist keinerlei manueller Eingriff durch einen Landwirt oder eine andere Betreuungsperson erforderlich, sodass junge Kälber automatisch zu jeder Tages- und Nachtzeit angelernt werden können.
Gleichzeitig wird das natürliche Saugen am Nuckel, bei dem das Tier das flüssige Nahrungsmittel selbst durch die Verbindungsleitung saugt, nicht durch eine in der Verbindungsleitung angeordnete Fördereinrichtung behindert.
Bevor das Fördern des flüssigen Nahrungsmittels in Richtung zu dem Abzweigpunkt hin ausgeführt wird, kann die Pumpe zunächst so angesteuert werden, dass die Abzweigleitung ganz oder teilweise mit flüssigem Nahrungsmittel gefüllt wird. Hierzu kann die Pumpe das flüssige Nahrungsmittel über die Verbindungsleitung aus dem Anmischbehälter ansaugen. Nach dem Erfassen einer Bewegung und/oder Verformung des Nuckels wird die Pumpe dann in entgegengesetzter Richtung angesteuert.
In einer Ausgestaltung ist der Sensor so angeordnet, dass er ein Anheben des Nuckels erfasst. In diesem Fall kann ein Anlernvorgang dann ausgelöst werden, wenn ein junges Tier von unten gegen den Nuckel drückt, was dem natürlichen Verhalten von Kälbern entspricht. Dies kann insbesondere dann geschehen, wenn das Tier den Nuckel während eines Trinkvorgangs erstmals anhebt. Bei einem weiteren Anheben kann auf ein weiteres Pumpen verzichtet werden.
In einer Ausgestaltung ist der Nuckel an einer beweglich gelagerten Haltung befestigt und der Sensor ist so angeordnet, dass er eine Bewegung der Halterung erfasst. Die Halterung kann beispielsweise eine Halteplatte sein. Der Nuckel kann zum Beispiel durch eine Öffnung in der Halterung hindurchgesteckt und daran befestigt sein. Die Halterung ist beweglich gelagert, beispielsweise schwenkbar um eine horizontale Achse. Hierzu kann die Halterung beispielsweise an einer Wandung angelenkt sein, zum Beispiel an einer Kälberbox. Eine beweglich gelagerte Halterung vereinfacht das Erkennen einer Bewegung des Nuckels.
In einer Ausgestaltung ist der Sensor innerhalb des Nuckels angeordnet. Diese Variante ist besonders geeignet, um eine Verformung des Nuckels zu erkennen, insbesondere wenn ein Jungtier den Nuckel zusammendrückt, beispielsweise wenn es darauf beißt. Auch in diesem Fall kann ein Anlernvorgang der beschriebenen Art hilfreich sein, um das Jungtier zum Saugen zu bewegen.
In einer Ausgestaltung ist der Sensor ein Magnetschalter. Beispielsweise kann ein Reed-Kontakt verwendet werden, der mit einem Magneten am Nuckel oder an der beweglich gelagerten Halterung zusammenwirkt, oder umgekehrt. Ein Magnetschalter ist besonders zuverlässig und unempfindlich gegen Verschmutzung.
In einer Ausgestaltung ist der Sensor ein Näherungssensor. Mit einem Näherungssensor kann ebenfalls eine Bewegung und/oder Verformung des Nuckels erfasst werden.
Bei der Erfindung ist die Steuerung dazu ausgebildet, die Pumpe bei Erfassen einer Bewegung und/oder Verformung des Nuckels derart anzusteuern, dass das flüssige Nahrungsmittel für einen vorgegebenen Zeitraum im Bereich von 0,1 s bis 2 s gefördert und die Pumpe anschließend abgeschaltet wird. Der Zeitraum ist insbesondere auf die Förderleistung der Pumpe und das Volumen der Verbindungsleitung zwischen dem Abzweigpunkt und dem Nuckel so abgestimmt, dass zuverlässig eine geringe Menge flüssigen Nahrungsmittels aus dem Nuckel austritt, jedoch nicht mehr. Ein zuverlässiger, unnötige Verschmutzungen vermeidender

Anlernvorgang wird durch die Vorgabe eines entsprechenden Zeitraums mit besonders einfachen Mitteln erreicht.

In einer Ausgestaltung weist die Vorrichtung eine Tiererkennungseinrichtung auf, die mit der Steuerung verbunden ist. Die Steuerung ist dazu ausgebildet, die Pumpe bei Erfassen einer Bewegung und/oder Verformung des Nuckels nur dann anzusteuern, wenn die Tiererkennungseinrichtung zuvor ein Jungtier erkannt hat. Als Tiererkennungseinrichtung kann insbesondere eine über Funk arbeitende Sende- und Empfangseinrichtung verwendet werden, die einen dem Tier zugeordneten Transponder ausliest. Hierzu kann die Tiererkennungseinrichtung eine Antenne aufweisen, die in der Nähe des Nuckels angeordnet ist. Die Steuerung kann dann anhand der ausgelesenen Kennung des Tieres insbesondere das zugehörige Alter des Tieres auswerten. Nur wenn das Alter unterhalb einer vorgegebenen Grenze liegt, wird ein Jungtier erkannt und ein Anlernvorgang ausgelöst.

In einer Ausgestaltung ist in der Verbindungsleitung zwischen dem Anmischbehälter und dem Abzweigpunkt ein Rückschlagventil angeordnet. Das Rückschlagventil verhindert, dass beim Fördern des flüssigen Nahrungsmittels in Richtung zu dem Abzweigpunkt hin Teile des Nahrungsmittels zurück zum Anmischbehälter gefördert werden. Der gesamte von der Pumpe geförderte Volumenstrom strömt daher vom Abzweigpunkt aus in Richtung zu dem Nuckel hin.

In einer Ausgestaltung ist in der Verbindungsleitung zwischen dem Abzweigpunkt und dem Nuckel ein Ventil angeordnet und die Steuerung ist dazu ausgebildet, das Ventil anzusteuern. Das Ventil kann insbesondere ein Klemmventil sein. Das Ventil kann für unterschiedliche Zwecke eingesetzt werden, beispielsweise um ein Ansaugen von Luft durch den Nuckel bei einem Reinigungsvorgang, bei dem die Pumpe ein Reinigungsmittel aus dem Anmischbehälter ansaugen soll, zu verhindern. Ein Schließen des Ventils kann auch sinnvoll sein, um die Verbindungsleitung zwischen Abzweigpunkt und Anmischbehälter mit Luft, die von der Pumpe in Richtung zu dem Abzweigpunkt hin gefördert wird, auszublasen.

In einer Ausgestaltung weist die Verbindungsleitung zwischen dem Abzweigpunkt und dem Nuckel eine Länge von 0,5 m oder weniger auf. Möglich ist auch eine noch geringere Länge von 0,25 m oder weniger. Dies ermöglicht eine schnelle Reaktion auf eine Bewegung und/oder Verformung des Nuckels, weil die Distanz zwischen Abzweigleitung und Nuckel nach sehr kurzen Förderzeiten überbrückt ist und das flüssige Nahrungsmittel entsprechend schnell aus dem Nuckel austritt.

In einer Ausgestaltung ist die Pumpe eine Schlauchpumpe. Eine Schlauchpumpe kann besonders einfach in beiden Förderrichtungen betrieben und zudem sehr einfach gereinigt werden.

Nachfolgend wird die Erfindung anhand eines in einer Figur dargestellten Ausführungsbeispiels näher erläutert.

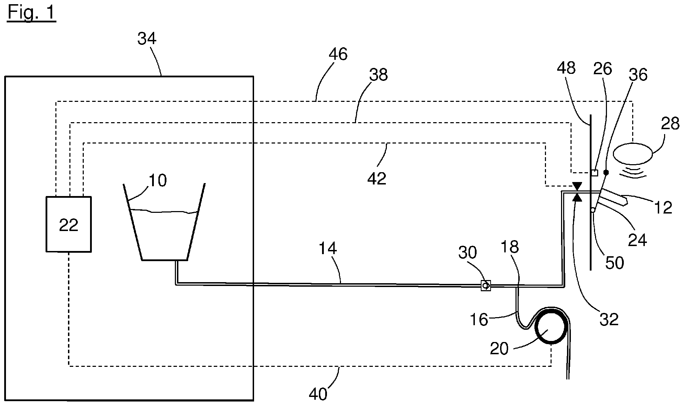

Die einzige Figur zeigt eine Vorrichtung zum automatischen Tränken von Kälbern in einer schematischen Darstellung.

Die Vorrichtung umfasst einen Tränkeautomaten 34, in dem ein Anmischbehälter 10 und eine Steuerung 22 angeordnet sind. In den Anmischbehälter kann insbesondere Milchpulver und warmes Wasser eingegeben und unter Verwendung eines Rührwerks miteinander vermischt werden. Dieser Anmischvorgang kann von der Steuerung 22 gesteuert werden.

Der Anmischbehälter 10 ist über die Verbindungsleitung 14 mit dem Nuckel 12 verbunden. Die Verbindungsleitung 14 kann beispielsweise eine Länge im Bereich von 2 m bis 6 m aufweisen. An einem Abzweigpunkt 18, der etwa 0,5 m oder weniger von dem Nuckel 12 entfernt ist, zweigt eine Abzweigleitung 16 von der Verbindungsleitung 14 ab.

Die Abzweigleitung 16 ist an einer Schlauchpumpe 20 angeordnet, mit der eine Flüssigkeit in der Abzweigleitung 16 in beiden Richtungen gefördert werden kann. Das von dem Abzweigpunkt 18 entfernte Ende der Abzweigleitung 16 ist offen und kann beispielsweise zum Ablassen von Restflüssigkeit oder Reinigungsmittel aus dem Anmischbehälter 10 eingesetzt werden. Zwischen dem Anmischbehälter 10 und dem Abzweigpunkt 18 ist ein Rückschlagventil 30 angeordnet, das einen Flüssigkeitsstrom in Richtung zu dem Anmischbehälter 10 hin unterbindet.

Das von dem Anmischbehälter 10 entfernte Ende der Verbindungsleitung 14 ist mit einem Nuckel 12 verbunden. Zwischen dem Abzweigpunkt 18 und dem Nuckel 12 ist ein Klemmventil 32 angeordnet, mit dem die Verbindungsleitung 14 abgesperrt werden kann.

Der Nuckel 12 ist auf einer um eine horizontale Achse 50 schwenkbar gelagerten Halterung 24 in Form einer Halteplatte befestigt. Die Halterung 24 ist an einer Wand 48, beispielsweise eine Wandung einer Kälberbox, beweglich befestigt. Wird der Nuckel 12 gegenüber der eingezeichneten Stellung angehoben, spricht ein Magnetschalter 26, der einen Reed-Kontakt aufweist und mit einem an der Halterung 24 angeordneten Magneten 36 zusammenwirkt, an. Der Magnetschalter 26 ist über eine erste elektrische Leitung 38 mit der Steuerung 22 verbunden. Die Schlauchpumpe 20 ist über eine zweite elektrische Leitung 40 ebenfalls mit der Steuerung 22 verbunden. Dies ermöglicht es der Steuerung 22, bei Erfassen einer Bewegung des Nuckels 12, registriert durch ein Ansprechen des Magnetschalters 26, die Pumpe 20 derart anzusteuern, dass in der Abzweigleitung 16 befindliches, flüssiges Nahrungsmittel in Richtung zu dem Abzweigpunkt 18 hin gefördert wird, und zwar für einen Zeitraum, der so bemessen ist, dass das flüssige Nahrungsmittel bis zum Nuckel 12 gelangt und darüber hinaus eine geringe Flüssigkeitsmenge aus dem Nuckel 12 austritt.

Die Steuerung 22 ist über eine dritte elektrische Leitung 42 mit dem Klemmventil 32 verbunden und kann dieses öffnen und schließen.

Außerdem ist eine Tiererkennungseinrichtung 28 angedeutet, die über eine vierte elektrische Leitung 46 mit der Steuerung 22 verbunden ist. Die Tiererkennungseinrichtung 28 kann einen an einem in der Nähe des Nuckels 12 befindlichen Tier befestigten Transponder auslesen, sodass die Steuerung 22 ein Jungtier erkennen und dann, bei Erfassen einer Bewegung und/oder Verformung des Nuckels 12, einen Anlernvorgang auslösen kann. Erkennt die Tiererkennungseinrichtung 28 hingegen ein älteres Tier, braucht kein Anlernvorgang ausgelöst zu werden.

## Patentansprüche

1. Vorrichtung zum automatischen Tränken von Kälbern mit
• einem Anmischbehälter (10) zum Anmischen eines flüssigen Nahrungsmittels,
• einem Nuckel (12),
• einer Verbindungsleitung (14), die den Anmischbehälter (10) mit dem Nuckel (12) verbindet,
• einer Abzweigleitung (16), die an einem Abzweigpunkt (18) von der Verbindungsleitung (14) abzweigt und die Verbindungsleitung (14) mit einer Pumpe verbindet, und
• einer Steuerung (22) zur Ansteuerung der Pumpe (20), wobei die Steuerung (22) dazu ausgebildet ist, die Pumpe derart anzusteuern, dass zunächst die Abzweigleitung (16) durch Ansaugen von flüssigem Nahrungsmittel aus dem Anmischbehälter (10) über die Verbindungsleitung (14) ganz oder teilweise mit flüssigem Nahrungsmittel gefüllt wird und dann durch Ansteuern der Pumpe (20) in entgegengesetzter Richtung flüssiges Nahrungsmittel aus der Abzweigleitung (16) in Richtung zu dem Abzweigpunkt (18) hin gefördert wird, bis flüssiges Nahrungsmittel aus dem Nuckel (12) austritt, **dadurch gekennzeichnet, dass**
• am Nuckel (12) ein Sensor angeordnet ist, der mit der Steuerung (22) verbunden und dazu ausgebildet ist, eine Bewegung und/oder Verformung des Nuckels (12) zu erfassen, und
• die Steuerung (22) dazu ausgebildet ist, bei Erfassen einer Bewegung und/oder Verformung des Nuckels (12) die Pumpe derart anzusteuern, dass das flüssige Nahrungsmittel für einen vorgegebenen Zeitraum im Bereich von 0,1 s bis 2 s aus der Abzweigleitung (16) in Richtung zu dem Abzweigpunkt (18) hin gefördert und die Pumpe (10) anschließend abgeschaltet wird, wobei der Zeitraum so auf die Förderleistung der Pumpe (10) und das Volumen der Verbindungsleitung (14) zwischen dem Abzweigpunkt (18) und dem Nuckel (12) abgestimmt ist, dass ein kleiner Spritzer des flüssigen Nahrungsmittels aus dem Nuckel (12) austritt.

2. Vorrichtung nach Anspruch 1, **dadurch gekennzeichnet, dass** der Sensor so angeordnet ist, dass er ein Anheben des Nuckels (12) erfasst.

3. Vorrichtung nach Anspruch 1 oder 2, **dadurch gekennzeichnet, dass** der Nuckel (12) an einer beweglich gelagerten Halterung (24) befestigt ist und der Sensor so angeordnet ist, dass er eine Bewegung der Halterung (24) erfasst.

4. Vorrichtung nach Anspruch 1, **dadurch gekennzeichnet, dass** der Sensor innerhalb des Nuckels (12) angeordnet ist.

5. Vorrichtung nach einem der Ansprüche 1 bis 4, **dadurch gekennzeichnet, dass** der Sensor ein Magnetschalter (26) ist.

6. Vorrichtung nach einem der Ansprüche 1 bis 4, **dadurch gekennzeichnet, dass** der Sensor ein Näherungssensor ist.

7. Vorrichtung nach einem der Ansprüche 1 bis 6, **dadurch gekennzeichnet, dass** die Vorrichtung eine Tiererkennungseinrichtung (28) aufweist, die mit der Steuerung (22) verbunden ist, und die Steuerung (22) dazu ausgebildet ist, die Pumpe bei Erfassen einer Bewegung und/oder Verformung des Nuckels (12) nur dann anzusteuern, wenn die Tiererkennungseinrichtung (28) zuvor ein Jungtier erkannt hat.

8. Vorrichtung nach einem der Ansprüche 1 bis 7, **dadurch gekennzeichnet, dass** in der Verbindungsleitung (14) zwischen dem Anmischbehälter (10) und dem Abzweigpunkt (18) ein Rückschlagventil (30) angeordnet ist.

9. Vorrichtung nach einem der Ansprüche 1 bis 8, **dadurch gekennzeichnet, dass** in der Verbindungsleitung (14) zwischen dem Abzweigpunkt (18) und dem Nuckel (12) ein Ventil (32) angeordnet ist und die Steuerung (22) dazu ausgebildet ist, das Ventil (32) anzusteuern.

10. Vorrichtung nach einem der Ansprüche 1 bis 9, **dadurch gekennzeichnet, dass** die Verbindungsleitung (14) zwischen dem Abzweigpunkt (18) und dem Nuckel (12) eine Länge von 0,5 m oder weniger aufweist.

11. Vorrichtung nach einem der Ansprüche 1 bis 10, **dadurch gekennzeichnet, dass** die Pumpe eine Schlauchpumpe (20) ist.

## Claims

1. A device for automatically feeding calves with
• a mixing container (10) for mixing a liquid food product,
• a teat (12),
• a connection line (14), which connects the mixing container (10) with the teat (12),
• a branch line (16), which branches off from the connection line (14) at a branch point (18) and connects the connection line (14) with a pump, and
• a controller (22) for controlling the pump (20), wherein the controller (22) is designed to control the pump (20) such that initially, the branch line (16) is filled fully or partly with liquid food product by sucking liquid food product out of the mixing container (10) via the connection line (14), and then, by controlling the pump in an opposite direction, liquid food product is delivered out of the branch line (16) towards the branch point (18) until liquid food product exits the teat (12), **characterized in that**
• a sensor is arranged on the teat (12), which is connected with the controller (22) and is designed to detect a movement and/or deformation of the teat (12), and
• the controller (22) is designed to control the pump upon detection of a movement and/or deformation of the teat (12) such that liquid food product is delivered for a predetermined period of time in a range of 0.1 s to 2 s out of the branch line (16) towards the branch point (18) and that the pump (20) is then switched off, wherein the period of time is adapted to the capacity of the pump (20) and the volume of the connection line (14) between the branch point (18) and the teat (12) such that a little splash of liquid food product exits the teat (12).

2. The device according to claim 1, **characterized in that** the sensor is arranged such that it detects a raising of the teat (12).

3. The device according to claim 1 or 2, **characterized in that** the teat (12) is fastened on a moveably mounted holder (24) and the sensor is arranged such that it detects a movement of the holder (24).

4. The device according to claim 1, **characterized in that** the sensor is arranged within the teat (12).

5. The device according to one of claims 1 to 4, **characterized in that** the sensor is a magnetic switch (26).

6. The device according to one of claims 1 to 4, **characterized in that** the sensor is a proximity switch.

7. The device according to one of claims 1 to 6, **characterized in that** the device has an animal detection device (28), which is connected with the controller (22), and the controller (22) is designed to control the pump upon the detection of a movement and/or deformation of the teat (12) only if the animal detection device (28) previously has detected a young animal.

8. The device according to one of claims 1 to 7, **characterized in that** a check valve (30) is arranged in the connection line (14) between the mixing container (10) and the branch point (18).

9. The device according to one of claims 1 to 8, **characterized in that** a valve (32) is arranged in the connection line (14) between the branch point (18) and the teat (12) and the controller (22) is designed to control the valve (32).

10. The device according to one of claims 1 to 9, **characterized in that** the connection line (14) between the branch point (18) and the teat (12) has a length of 0.5 m or less.

11. The device according to one of claims 1 to 10, **characterized in that** the pump is a hose pump (20).

## Revendications

1. Dispositif d'abreuvage automatique de veaux avec
• un récipient de mélange (10) pour le mélange d'un aliment liquide,
• une tétine (12),
• une conduite de connexion (14) qui connecte le récipient de mélange (10) à la tétine (12),
• une conduite de dérivation (16) qui dérive de la conduite de connexion (14) à un point de dérivation (18) et connecte la conduite de connexion (14) à une pompe, et
• une commande (22) pour la commande de la pompe (20), dans lequel la commande (22) est réalisée pour commander la pompe de telle sorte que la conduite de dérivation (16) est d'abord remplie entièrement ou partiellement d'aliment liquide par aspiration d'aliment liquide depuis le récipient de mélange (10) par le biais de la conduite de connexion (14), puis de l'aliment liquide est transporté de la conduite de dérivation (16) en direction du point de dérivation (18) par commande de la pompe (20) dans la direction opposée jusqu'à ce que de l'aliment liquide sorte de la tétine (12), **caractérisé en ce que**
• un capteur est disposé sur la tétine (12), lequel est connecté à la commande (22) et réalisé pour détecter un mouvement et/ou une déformation de la tétine (12), et
• la commande (22) est réalisée pour commander la pompe lors de la détection d'un mouvement et/ou d'une déformation de la tétine (12) de telle sorte que l'aliment liquide est transporté pendant une durée prédéfinie dans la plage de 0,1 s à 2 s de la conduite de dérivation (16) en direction du point de dérivation (18) et la pompe (10) est ensuite déconnectée, dans lequel la durée est adaptée à la puissance de transport de la pompe (10) et au volume de la conduite de connexion (14) entre le point de dérivation (18) et la tétine (12) de sorte qu'une petite giclée de l'aliment liquide sort de la tétine (12).

2. Dispositif selon la revendication 1, **caractérisé en ce que** le capteur est disposé de sorte qu'il détecte un soulèvement de la tétine (12).

3. Dispositif selon la revendication 1 ou 2, **caractérisé en ce que** la tétine (12) est fixée à une attache (24) logée de manière mobile et le capteur est disposé de sorte qu'il détecte un mouvement de l'attache (24).

4. Dispositif selon la revendication 1, **caractérisé en ce que** le capteur est disposé au sein de la tétine (12).

5. Dispositif selon une des revendications 1 à 4, **caractérisé en ce que** le capteur est un commutateur magnétique (26).

6. Dispositif selon une des revendications 1 à 4, **caractérisé en ce que** le capteur est un capteur de proximité.

7. Dispositif selon une des revendications 1 à 6, **caractérisé en ce que** le dispositif présente une installation de reconnaissance animale (28) qui est connectée à la commande (22), et la commande (22) est réalisée pour commander la pompe lors de la détection d'un mouvement et/ou d'une déformation de la tétine (12) uniquement lorsque l'installation de reconnaissance animale (28) a reconnu un jeune auparavant.

8. Dispositif selon une des revendications 1 à 7, **caractérisé en ce qu'**un clapet antire-tour (30) est disposé dans la conduite de connexion (14) entre le récipient de mélange (10) et le point de dérivation (18).

9. Dispositif selon une des revendications 1 à 8, **caractérisé en ce qu'**une soupape (32) est disposée dans la conduite de connexion (14) entre le point de dérivation (18) et la tétine (12), et la commande (22) est réalisée pour commander la soupape (32).

10. Dispositif selon une des revendications 1 à 9, **caractérisé en ce que** la conduite de connexion (14) présente une longueur de 0,5 m ou moins entre le point de dérivation (18) et la tétine (12).

11. Dispositif selon une des revendications 1 à 10, **caractérisé en ce que** la pompe est une pompe tubulaire (20).
